Europäisches Patentamt

European Patent Office

Office européen des brevets

(19)

(11) **EP 0 692 466 A1**

(12) **EUROPÄISCHE PATENTANMELDUNG**

(43) Veröffentlichungstag:
**17.01.1996 Patentblatt 1996/03**

(51) Int. Cl.$^6$: **C04B 35/65**, C04B 35/117,
C09K 3/14

(21) Anmeldenummer: **95110051.0**

(22) Anmeldetag: **28.06.1995**

(84) Benannte Vertragsstaaten:
**AT DE FR IT**

(30) Priorität: **11.07.1994 DE 4424402**

(71) Anmelder: **BAYER AG**
**D-51368 Leverkusen (DE)**

(72) Erfinder: **Perchenek, Nils, Dr.**
**D-51373 Leverkusen (DE)**

(54) **Borsubphosphid-Aluminiumoxid-Verbundmaterialien, Verfahren zu deren Herstellung und deren Verwendung**

(57) Die vorliegende Erfindung betrifft Borsubphosphid-Aluminiumoxid-Verbundmaterialien, Verfahren zur Herstellung dieser Materialien sowie deren Verwendung.

EP 0 692 466 A1

Printed by Rank Xerox (UK) Business Services
2.9.2/3.4

## Beschreibung

Die vorliegende Erfindung betrifft Borsubphosphid-Aluminiumoxid-Verbundmaterialien, Verfahren zur Herstellung dieser Materialien sowie deren Verwendung.

Durch Kombination von Aluminiumoxid mit anderen keramischen Hartstoffen lassen sich Verbundwerkstoffe erhalten, die in ihren mechanische Eigenschaften oft denen der Einzelkomponenten überlegen sind. In diesen Verbundwerkstoffen kommt eine Vielzahl von Verbindungen zum Einsatz, meist aus dem Bereich der Carbide, Boride, Nitride oder Silizide (EP-A 0 571 866). Beispiele sind Verbundmaterialien von $Al_2O_3$ mit $TiB_2$, $B_4C$, SiC, TiC, TaC, WC, TiCN, CBN, $Si_3N_4$ und anderen. Jedes dieser Materialien ist in bestimmten Anwendungsbereichen einsetzbar, in anderen Fällen weniger geeignet. Häufig sind z.B. die Härte oder Zähigkeit zu gering, der Verbund zwischen den Komponenten nicht optimal oder die Kosten des Materials zu hoch.

Aufgabe der Erfindung ist daher die Bereitstellung von neuartigen Verbundmaterialien, die als Hartstoffe eingesetzt werden können, sowie von Verfahren zur einfachen und wirtschaftlichen Herstellung dieser Materialien.

Die Anforderungen werden durch die folgenden neuartigen Materialien erfüllt, die Gegenstand dieser Erfindung sind. Es handelt sich dabei um Verbundmaterialien aus Aluminiumoxid und Phosphiden der allgemeinen Formel $B_{12+x}Al_yP_{2-z}$, wobei gilt: $0 \leq x \leq 1$, $0 \leq y < 1$, $0 \leq z \leq (x+y)$. In einem bevorzugten Fall ist $y = 0$. Dann liegen binäre Borsubphosphide vor, die besonders hohe Härten zeigen. Die Verbindungen $B_{12+x}Al_yP_{2-z}$ weisen je nach Zusammensetzung Vickershärten im Bereich von 33 - 36 GPa auf, die nur noch von Stoffen wie CBN und Diamant übertroffen werden. Im Verbund mit Aluminiumoxid steigern sie dessen Härte erheblich. Sie lassen sich zudem ausgezeichnet in Aluminiumoxid einbinden.

In einer bevorzugten Ausführungsform beträgt der Aluminiumoxidanteil in den erfindungsgemäßen Verbundmaterialien zwischen 4 und 99,9 Gew.%, besonders bevorzugt zwischen 40 und 99 Gew.%, da sich in diesem Fall eine durchgehende, die Partikel der borhaltigen Komponente umhüllende Aluminiumoxidmatrix ausbilden kann, was eine höhere Festigkeit des Verbundmaterials zur Folge hat.

Bevorzugt wird man Materialien herstellen, in denen die Partikel von $B_{12+x}Al_yP_{2-z}$ homogen in der Aluminiumoxidmatrix verteilt sind; es lassen sich durch geeignete Verfahren aber auch Materialien herstellen, in denen Zonen mit homogener Verteilung und Bänder oder Schichten von reinem Aluminiumoxid abwechseln.

Gegenstand dieser Erfindung sind weiterhin Verfahren zur Herstellung der erfindungsgemäßen Verbundmaterialien.

Die erfindungsgemäßen Verbundmaterialien lassen sich besonders elegant und wirtschaftlich durch aluminothermische Reduktion von Borphosphat $BPO_4$ herstellen. Dabei entsteht in situ das Verbundmaterial. Der Anteil an Aluminium in der Produktmischung muß dabei mindestens ausreichend sein, um den im Borphosphat enthaltenen Sauerstoff vollständig binden zu können, was bei einer binären Mischung ab etwa 40 Gew.% Aluminium der Fall ist. Bei der Reaktion entweicht der überschüssige Phosphor in gasförmiger Form. Um dies zu vermeiden, geht man zweckmäßigerweise bei der Reduktion von Pulvermischungen aus Borphosphat, Bor und Aluminium aus. Um den im Borphospat enthaltenen Sauerstoff vollständig zu binden, muß das Gewichtsverhältnis von Borphosphat zu Aluminium kleiner als 1,5 sein. Bevorzugt verwendet man Mischungen, die auf die Stöchiometrie der gewünschten Verbindung $B_{12+x}Al_yP_{2-z}$ berechnet sind. Das Verhältnis von Aluminiumoxid und Borverbindung im Reaktionsprodukt läßt sich durch Zugabe von Aluminiumoxid oder $B_{12+x}Al_yP_{2-z}$ zur Eduktmischung beeinflussen. Durch diese Zusätze lassen sich auch Reaktionsgeschwindigkeit und -temperatur steuern.

Zur Durchführung der Reaktion wird die Eduktmischung entweder als Pulverschüttung oder in kompaktierter Form eingesetzt. Bevorzugt wird die Eduktmischung dann gezündet, da sich die Reaktion aufgrund ihrer großen Exothermie selbst unterhält und innerhalb kürzester Zeit vollständig abläuft. Die Zündung kann durch schnelles Erhitzen des gesamten Ansatzes in einem Ofen oder auch lokal mittels elektrischen Zündern, Flammen, Zündmischungen oder anderen, dem Fachmann geläufigen Methoden erfolgen. Aufgrund der hohen Reaktionswärme verdampfen die meisten in den Edukten enthaltenen Verunreinigungen, so daß deren Gehalt im Produkt deutlich vermindert ist. Aufgrund der Gasentwicklung, aber auch wegen des bei der Reaktion auftretenden Volumensprungs, der auf die gegenüber den Edukten höhere Dichte des erfindungsgemäßen Verbundmaterials zurückgeht, erhält man als Reaktionsprodukt meist ein poröses Material, aus dem sich durch Aufmahlen und anschließendes Sintern kompakte Körper erhalten lassen.

In einer bevorzugten Ausführungsform wird der Prozeß so geführt, daß die bei der Reaktion erzeugte Wärme ausreicht, um das Aluminiumoxid bis nach dem Entweichen der bei der Reaktion gebildeten Gase flüssig zu halten. Man erhält so ein Produkt von deutlich geringerer Porosität, das sich direkt zu für Schleifanwendungen geeigneten Körnungen brechen läßt.

Die erfindungsgemäßen Verbundmaterialien lassen sich auch aus Pulvermischungen von Aluminiumoxid und $B_{12+x}Al_yP_{2-z}$ herstellen. In einer bevorzugten Ausführungsform werden hierzu Pulvermischungen der Edukte bei Temperaturen oberhalb 1800°C gesintert, in einer besonders bevorzugten Ausführungsform oberhalb von 2050°C, da bei diesen Temperaturen die Aluminiumoxidmatrix in geschmolzener Form vorliegt.

Gegenstand der Erfindung ist auch die Verwendung der erfindungsgemäßen ternären Verbundmaterialien als Schleifkörner in Schleifmitteln.

Im folgenden ist die Erfindung beispielhaft erläutert, ohne daß hierin eine Einschränkung zu sehen ist.

**Beispiel 1:**

50 g Borphosphat, 25,6 g amorphes Bor und 34 g Aluminiumpulver wurden in 140 ml 2-Propanol suspendiert und im Attritor mit Korundkugeln 2 h lang bei 1000 U/min gemischt. Nach dem Entfernen des Lösungsmittels wurde das erhaltene Gemenge bei 130°C getrocknet. Aus der Eduktmischung wurden unter isostatischem Druck von 2 kbar Preßkörper hergestellt. Diese wurden zwischen zwei Kupferelektroden eingespannt und durch Anlegen einer Wechselspannung von ca. 40 V gezündet. Bei der sehr heftigen Reaktion bläht sich der Preßling deutlich auf. Unter dem Lichtmikroskop läßt er eine schwammartige, poröse Struktur erkennen. Im erhaltenen Material sind die durchschnittlich ca. 1 µm großen Partikeln von $B_{12+x}Al_yP_{2-z}$ homogen in der Aluminiumoxidmatrix verteilt. Im Röntgenbeugungsdiagramm lassen sich nur Korund und $B_{13}P_2$ nachweisen.

**Beispiel 2:**

50 g Borphosphat, 28,1 g amorphes Bor und 34 g Aluminiumpulver wurden in 140 ml 2-Propanol suspendiert und im Attritor mit Korundkugeln 2 h lang bei 1000 U/min gemischt. Das Lösungsmittel wurde entfernt und der Rückstand bei 130°C getrocknet. Die erhaltene Pulvermischung wurde unter uniaxialem Druck von 1 kbar zu einem Preßkörper kompaktiert. Dieser wurde zur Verringerung von Wärmeverlusten während der Reaktion mit Steinwolle isoliert und in einem mit Argon gespülten Reaktionsgefäß durch eine Mischung von $KMnO_4$ und Glycerin gezündet. Nach der Reaktion wies der Probenkörper im Inneren eine schichtartige, schieferähnliche Struktur auf; unter dem Lichtmikroskop ließen sich hauptsächlich Bereiche mit homogener Verteilung von $B_{12+x}Al_yP_{2-z}$ und Aluminiumoxid erkennen. Die Vickershärte des Materials in diesen Bereichen, gemessen mit einer Prüflast von 2 N, wurde zu 30 GPa ermittelt. Daneben wurden auch bänder- oder schichtartige Zonen von reinem Aluminiumoxid gefunden. Durch vorsichtiges Aufmahlen konnten kompakte Körner mit Durchmessern von bis zu 0,7 mm erhalten werden.

**Beispiel 3:**

10 g Borphosphat, 5,1 g amorphes Bor, 6.8 g Aluminiumpulver und 1 g Aluminumoxidpulver wurden in 100 ml 2-Propanol suspendiert. Die Mischung wurde zum Sieden erhitzt und das Lösungsmittel abdestilliert; der Rückstand wurde bei 130°C getrocknet. Aus der erhaltenen Pulvermischung wurden unter isostatischem Druck von 2 kbar Preßkörper hergestellt. Diese wurden in einen auf 800°C vorgeheizten, mit Argon gespülten Rohrofen überführt. Nach etwa 60 Sekunden glühte der Preßling sehr hell auf. Nach der Reaktion war der Preßkörper entlang der Längsachse deutlich aufgequollen und wies eine tannenzapfenartige Struktur auf. Unter dem Lichtmikroskop war zu erkennen, daß das dem Eduktgemisch zugesezte Aluminiumoxid während der Reaktion aufgeschmolzen worden war.

**Beispiel 4:**

5,0 g $B_{12}Al_{0,3}P_{1,7}$ und 5,0 g Aluminiumoxidpulver wurden in 50 ml 2-Propanol suspendiert und mit Eisenkugeln 2 h lang mit 300 U/min in einer Planetenkugelmühle aufgemahlen. Das erhaltene Gemenge wurde zur Entfernung des Mahlkugelabriebs mit wäßriger Salzsäure behandelt und anschließend bei 130°C getrocknet. Aus der erhaltenen Pulvermischung wurden unter isostatischem Druck von 8 kbar Preßkörper hergestellt. Diese wurden unter Argon für 15 Minuten auf 2100°C erhitzt. Es wurden kompakte Probenkörper mit homogener Verteilung von $B_{12}Al_{0,3}P_{1,7}$ und Aluminiumoxid erhalten, in denen unter dem Lichtmikroskop bei 1000facher Vergrößerung keine Poren gefunden wurden und mit denen sich SiC ritzen ließ.

**Patentansprüche**

1. Keramische Verbundmaterialien, dadurch gekennzeichnet, daß deren Bestandteile Aluminiumoxid und Verbindungen der allgemeinen Zusammensetzung $B_{12+x}Al_yP_{2-z}$ sind, wobei gilt: $0 \leq x \leq 1$, $0 \leq y <1$ und $0 \leq z \leq (x+y)$ .

2. Keramische Verbundmaterialien gemäß Anspruch 1, dadurch gekennzeichnet, daß $y = 0$ ist.

3. Keramische Verbundmaterialien gemäß einem der Ansprüche 1 oder 2, dadurch gekennzeichnet, daß der Anteil an Aluminiumoxid zwischen 4 und 99,9 Gew.% beträgt.

4. Keramische Verbundmaterialien gemäß einem oder mehreren der Ansprüche 1 bis 3, dadurch gekennzeichnet, daß der Anteil an Aluminiumoxid zwischen 40 und 99 Gew.% beträgt.

5. Keramische Verbundmaterialien gemäß einem oder mehreren der Ansprüche 1 bis 4, dadurch gekennzeichnet, daß Partikel von $B_{12+x}Al_yP_{2-z}$, mit $0 \leq x \leq 1$, $0 \leq y <1$ und $0 \leq z \leq (x+y)$ , homogen in einer Matrix von Aluminiumoxid verteilt vorliegen.

6. Verfahren zur Herstellung der keramischen Verbundmaterialien gemäß einem oder mehreren der Ansprüche 1 bis 5, dadurch gekennzeichnet, daß Borphosphat und Aluminium in einer Redoxreaktion umgesetzt werden, wobei der Anteil an Aluminium in der Eduktmischung mindestens 40 Gew.% beträgt.

7. Verfahren zur Herstellung der keramischen Verbundmaterialien gemäß einem oder mehreren der Ansprüche 1 bis 5, dadurch gekennzeichnet, daß Mischungen von Borphosphat, Bor und Aluminium zur Reaktion gebracht werden, in denen das Gewichtsverhältnis von Borphosphat zu Aluminium <1,5 ist.

8. Verfahren gemäß Anspruch 7, dadurch gekennzeichnet, daß die Edukte in dem für die Bildung von $B_{12+x}Al_yP_{2-z}$, mit $0 \leq x \leq 1$, $0 \leq y <1$ und $0 \leq z \leq (x+y)$, berechneten stöchiometrischen Verhältnis eingesetzt werden.

9. Verfahren gemäß einem oder mehreren der Ansprüche 6 bis 8, dadurch gekennzeichnet, daß der Eduktmischung Zuschläge von Aluminiumoxid oder $B_{12+x}Al_yP_{2-z}$, mit $0 \leq x \leq 1$, $0 \leq y <1$ und $0 \leq z \leq (x+y)$, zugesetzt werden.

10. Verfahren gemäß einem oder mehreren der Ansprüche 6 bis 9, dadurch gekennzeichnet, daß die Reaktion durch Zünden der Eduktmischung initiiert wird.

11. Verfahren zur Herstellung der keramischen Verbundmaterialien gemäß einem oder mehreren der Ansprüche 1 bis 5, dadurch gekennzeichnet, daß Mischungen von Aluminiumoxid und $B_{12+x}Al_yP_{2-z}$, mit $0 \leq x \leq 1$, $0 \leq y <1$ und $0 \leq z \leq (x+y)$, bei Temperaturen oberhalb 1800°C gesintert werden.

12. Verfahren gemäß Anspruch 11, dadurch gekennzeichnet, daß bei Temperaturen oberhalb 2050°C getempert wird.

13. Verwendung der keramischen Verbundmaterialien gemäß einem oder mehreren der Ansprüche 1 bis 12 als Schleifkörner in Schleifmitteln.

EP 0 692 466 A1

**Europäisches Patentamt**

**EUROPÄISCHER RECHERCHENBERICHT**

Nummer der Anmeldung

EP 95 11 0051

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | US-A-4 891 337 (GEORGIA TECH RESEARCH CORP.)<br>* das ganze Dokument * | 1-6 | C04B35/65<br>C04B35/117<br>C09K3/14 |
| A | WO-A-85 01044 (ELTECH SYSTEMS CORPORATION)<br>* das ganze Dokument * | 1-6 | |
| A | EP-A-0 504 786 (W.R. GRACE & CO.-CONN.)<br>* das ganze Dokument * | 1-6 | |

RECHERCHIERTE SACHGEBIETE (Int.Cl.6)

C04B
C09K

Der vorliegende Recherchenbericht wurde für alle Patentansprüche erstellt

| Recherchenort | Abschlußdatum der Recherche | Prüfer |
|---|---|---|
| DEN HAAG | 27.Oktober 1995 | Luethe, H |